Europäisches Patentamt

**European Patent Office**

**Office européen des brevets**

(19)

(11) Numéro de publication: **0 120 759**
**A1**

(12)

# DEMANDE DE BREVET EUROPEEN

(21) Numéro de dépôt: **84400492.9**

(51) Int. Cl.³: **B 26 D 1/15**
**A 22 C 25/18**

(22) Date de dépôt: **12.03.84**

(30) Priorité: **14.03.83 FR 8304165**

(43) Date de publication de la demande:
**03.10.84 Bulletin 84/40**

(84) Etats contractants désignés:
**BE DE GB IT NL SE**

(71) Demandeur: **S A E ESUN, Société dite:**
**75 rue Charles le Goffic**
**F-29000 Quimper(FR)**

(72) Inventeur: **Esun, Jacques**
**75, rue Charles Le Goffic**
**Quimper(Finistère)(FR)**

(74) Mandataire: **Cabinet BERT, DE KERAVENANT &**
**HERRBURGER**
**115, Boulevard Haussmann**
**F-75008 Paris(FR)**

(54) Machine à découper des denrées alimentaires de grandes dimensions notamment des thons.

(57) Machine à découper des denrées alimentaires de grandes dimensions, notamment des thons se composant d'un tapis transporteur (1) d'axe approximativement horizontal, mobile en translation, comportant un poste d'entrée (E) des thons entiers, un poste de sortie (S) des thons découpés, ainsi qu'un poste de coupe (C) dans lequel les thons sont soumis à l'action d'un couteau circulaire (3).

EP 0 120 759 A1

Croydon Printing Company Ltd.

1

"Machine à découper des denrées alimentaires de grandes dimensions, notamment des thons".

La présente invention se rapporte à une machine à découper des denrées alimentaires de grandes dimensions, notamment des thons.

Le découpage des thons entiers qui arrivent dans les usines telles que les conserveries, soit frais, soit plus généralement congelés, n'est pas sans poser de multiples problèmes.

En effet, ces poissons peuvent atteindre des dimensions considérables, notamment des longueurs pouvant aller jusqu'à 3 mètres et des poids d'environ 500 kg, qui rendent un prédécoupage dans le sens de la longueur, puis transversalement, indispensable avant tout traitement ou manipulation ultérieur.

Jusqu'à présent, ce prédécoupage était effectué de manière semi-manuelle au moyen de scies à ruban présentant l'inconvénient d'avoir des lames fragiles, donc se rompant facilement, entraînant par suite des risques de blessures graves pour le personnel de manutention.

La présente invention a pour objet de remédier à cet inconvénient en proposant une machine du type ci-dessus, caractérisée en ce qu'elle se compose d'un tapis transporteur approximativement horizontal, mobile en translation, comportant un poste d'entrée des thons entiers, un poste de sortie des thons découpés ainsi qu'un poste de coupe dans lequel les thons sont soumis à l'action d'un couteau circulaire, mobile en rotation, autour d'un axe horizontal perpendiculaire à l'axe du tapis, le mouvement de rotation du couteau circulaire étant commandé par un moteur électrique ou hydraulique.

Pour s'adapter à la taille de thons ayant une épaisseur pouvant dépasser 40 cm, il est indispensable que le couteau soit de grandes dimensions.

Selon une caractéristique préférentielle de l'invention, ce dernier a un diamètre pouvant atteindre 1,25 mètre.

Le profil du couteau est différent selon qu'il est destiné à découper des thons décongelés ou frais ou des thons congelés.

Dans le premier cas, il est indispensable d'éviter les déchets de coupe tout en ayant la possibilité de couper la colonne vertébrale sans effort supplémentaire important. Pour ce, on utilise de préférence une lame dont le profil est constitué par une succession de festons.

Lorsque l'on doit découper des thons congelés, on doit envisager un couteau plus "performant", notamment un couteau ayant un profil en forme de scie.

Selon une autre caractéristique de l'invention, ce couteau scie comporte des plaquettes rapportées. On obtient ainsi un profil en forme de fraise donnant toute satisfaction pour la découpe des thons congelés.

Selon une autre caractéristique de l'invention, le couteau rotatif est contenu dans un carter fixe.

Selon une autre caractéristique de l'invention, la machine comporte des organes de sécurité interdisant à toute personne d'atteindre le couteau pendant sa rotation.

La présence de ces organes est indispensable pour garantir la sécurité du personnel de manutention.

Selon une autre caractéristique de l'invention, les organes de sécurité sont des capots relevables placés au poste d'entrée et au poste de sortie et dont la

3

manoeuvre de relevage arrête instantanément le moteur de commande de la rotation du couteau.

Ce couteau ne peut être remis en fonctionnement qu'après intervention manuelle et fermeture du capot du poste d'entrée et du capot du poste de sortie.

La machine qui fait l'objet de l'invention sera décrite plus en détail en se référant aux dessins annexés dans lesquels :

- la figure 1 est une vue schématique de côté de cette machine,

- la figure 2 est une vue de dessus de la machine,

- la figure 3 est une représentation schématique d'une première variante de lames de couteaux,

- la figure 4 est une seconde variante de lames de couteaux.

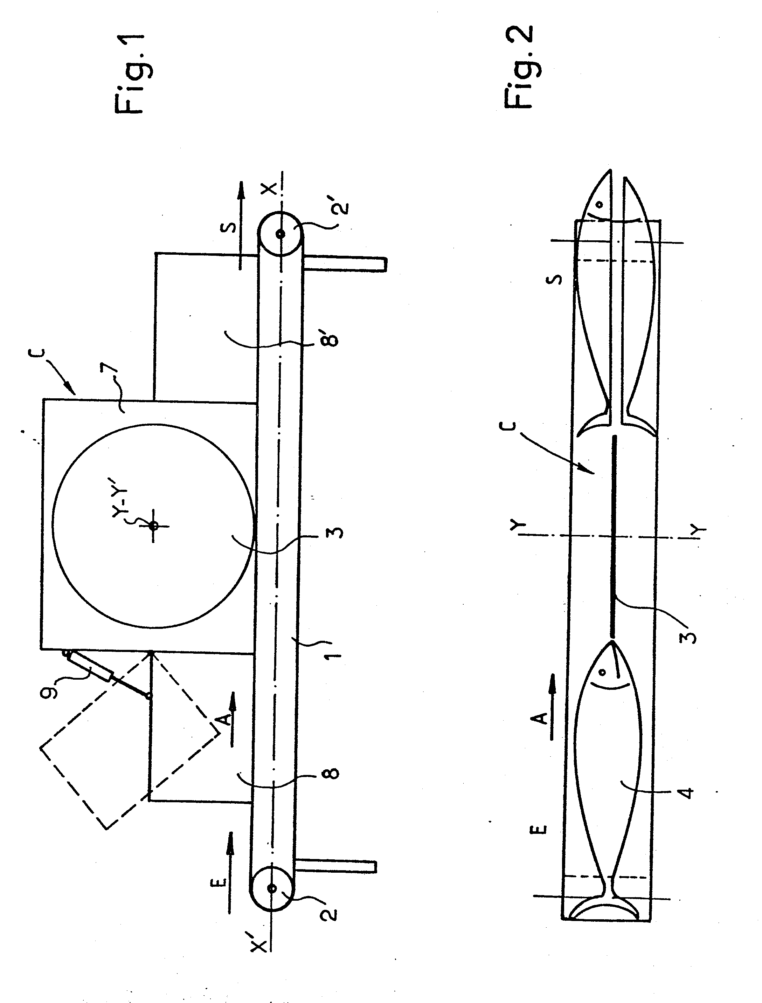

Selon les figures 1 et 2, la machine à découper des denrées alimentaires de grandes dimensions et notamment des thons, qui fait l'objet de l'invention, se compose d'un tapis transporteur 1 dont l'axe X-X' est approximativement horizontal. Ce tapis transporteur 1 est entraîné en translation selon la flèche A consécutivement à la rotation de deux rouleaux entraîneurs 2 et 2' qui sont eux-mêmes entraînés en rotation par l'intermédiaire d'un moteur non représenté.

Le tapis transporteur comporte un poste d'entrée E des thons entiers, un poste de sortie S des thons découpés, ainsi qu'un poste de coupe C dans lequel les thons sont soumis à l'action d'un couteau circulaire 3 mobile en rotation autour d'un axe horizontal Y-Y' perpendiculaire à l'axe X-X' de translation du tapis 1. Le mouvement de rotation du couteau circulaire 3 est commandé par un moteur électrique ou hydraulique non représenté.

Pour permettre de couper des thons 4 dont

4

l'épaisseur peut aller jusqu'à 40 cm, il est indispensable que le couteau 3 soit de grand diamètre, de préférence de l'ordre de 1 mètre.

Bien entendu, selon le sens d'introduction des thons 4 au poste d'entrée E, ceux-ci peuvent être coupés soit longitudinalement comme représenté sur la figure 2, soit transversalement. De même, un même thon peut passer plusieurs fois dans le dispositif de coupe.

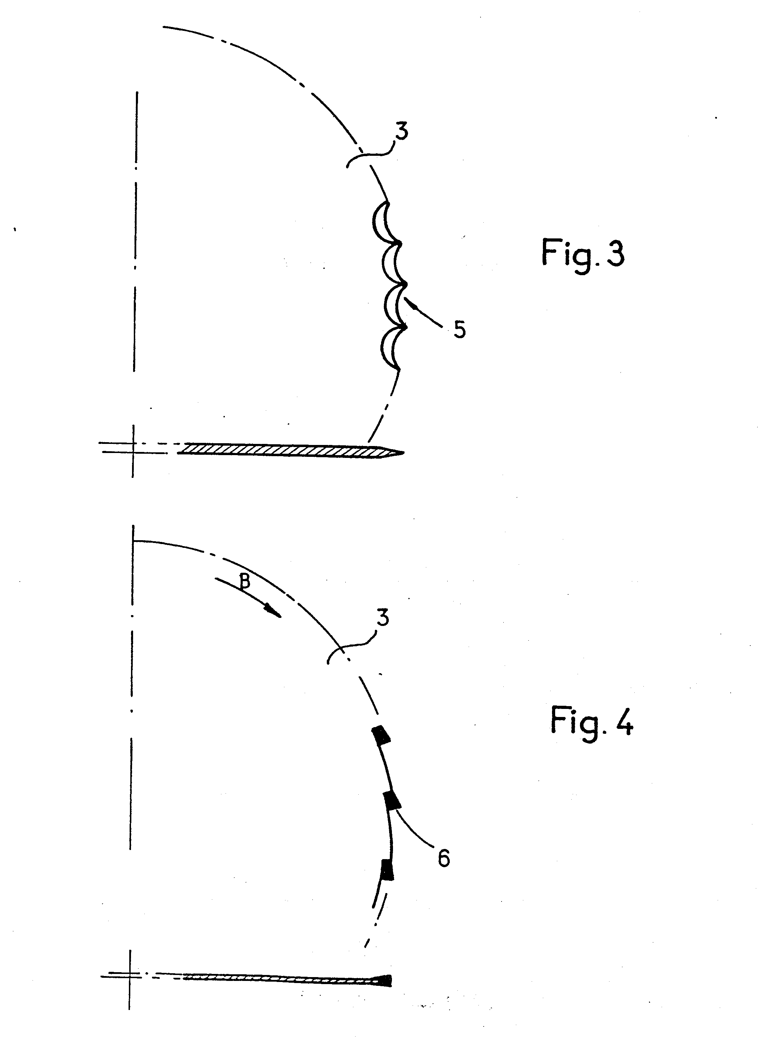

Selon les figures 3 et 4, le profil du couteau circulaire 3 est différent selon qu'il est destiné à découper des thons frais ou des thons congelés.

Dans le cas du découpage de thons frais (ou décongelés) et selon la figure 3, le couteau 3 a un profil constitué par une succession de festons 5. Ce profil particulier évite les déchets de coupe et permet de couper la colonne vertébrale du poisson sans effort supplémentaire important.

Selon la figure 4, dans le cas de thons congelés (donc beaucoup plus durs), on utilise un couteau ayant un profil en forme de scie, tournant selon la flèche B, et comportant des plaquettes 6 rapportées qui augmentent la rigidité de l'ensemble. Il s'agit là en quelque sorte d'un profil en forme de fraise.

Selon les figures 1 et 2, il est indispensable de protéger le personnel de manutention lors de la rotation du couteau. Pour ce, ce couteau 3 est contenu dans un carter fixe 7, et il est prévu en aval du poste d'entrée E et en amont du poste de sortie S des organes de sécurité constitués par des capots relevables 8 et 8' qui sont forcément dans la position abaissée (représentée en traits pleins sur la figure 1) lorsque le couteau 3 est en rotation, de façon à interdire à toute personne d'atteindre le couteau pendant sa rotation.

Pour permettre l'entretien ou le dépannage de la machine, les capots 8, 8' peuvent être relevés

5

dans la position représentée en pointillés sur la figure 1 (poste d'entrée E). Ce mouvement est notamment commandé au moyen de vérins 9.

Il est prévu des organes de sécurité non représentés qui arrêtent instantanément la rotation du couteau 3 dès qu'une manoeuvre de relevage d'un capot 8 ou 8' est commencée. Ce couteau ne peut être remis en fonctionnement qu'après intervention manuelle et fermeture des deux capots 8, 8'.

Les capots 8 et 8' sont ouverts sur leur face côté entrée et côté sortie pour permettre l'introduction et l'évacuation des thons.

6

## REVENDICATIONS

1) Machine à découper des denrées alimentaires de grandes dimensions, notamment des thons, caractérisé en ce qu'elle se compose d'un tapis transporteur (1) d'axe approximativement horizontal, mobile en translation, comportant un poste d'entrée (E) des thons entiers, un poste de sortie (S) des thons découpés, ainsi qu'un poste de coupe (C) dans lequel les thons sont soumis à l'action d'un couteau circulaire (3) mobile en rotation autour d'un axe horizontal (Y-Y') perpendiculaire à l'axe (X-X') du tapis, le mouvement de rotation du couteau circulaire (3) étant commandé par un moteur électrique ou hydraulique.

2) Machine selon la revendication 1, caractérisée en ce que le couteau circulaire (3) a un diamètre approximativement égal à 1,25 mètre.

3) Machine selon l'une quelconque des revendications 1 et 2, caractérisée en ce que le couteau (3) a un profil constitué par une succession de festons (5).

4) Machine selon l'une quelconque des revendications 1 et 2, caractérisée en ce que le couteau a un profil en forme de scie.

5) Machine selon la revendication 4, caractérisée en ce que le couteau rotatif comporte des plaquettes rapportées (6).

6) Machine selon l'une quelconque des revendications 1 à 5, caractérisée en ce que le couteau rotatif (3) est contenu dans un carter fixe (7).

7) Machine selon l'une quelconque des revendications 1 à 6, caractérisée en ce qu'elle comporte des organes de sécurité interdisant à toute personne d'atteindre le couteau (3) pendant sa rotation.

8) Machine selon la revendication 7, caractérisée en ce que les organes de sécurité sont des capots relevables (8, 8') placés au poste d'entrée (E) et au poste de sortie (S) et dont la manoeuvre de relevage arrête instantanément le moteur de commande de la rotation du couteau (3).

Fig.1

Fig.2

0120759

Fig. 3

3

5

Fig. 4

B

3

6

Office européen
des brevets

**RAPPORT DE RECHERCHE EUROPEENNE**

EP 84 40 0492

| Catégorie | Citation du document avec indication, en cas de besoin, des parties pertinentes | Revendication concernée | CLASSEMENT DE LA DEMANDE (Int. Cl. ³) |
|---|---|---|---|
| | **DOCUMENTS CONSIDERES COMME PERTINENTS** | | |
| X | GB-A-1 534 296 (DANEPAK) <br> * Page 1, ligne 90 - page 2, ligne 11; revendication 1; figures * | 1 | B 26 D 1/15 <br> A 22 C 25/18 |
| X | US-A-4 363 251 (CARLSON) <br> * Colonne 2, lignes 39-57; revendication 1 * | 1 | |
| X | US-A-2 288 010 (MELAND) <br> * Page 1, colonne de droite, ligne 50 - page 2, colonne de gauche, ligne 63; figures 1,2 * | 1,6 | |
| A | FR-A- 961 696 (MOREAU) <br> * Page 1, lignes 52-54; figure 1 * | 2,4 | |
| A | FR-A-2 438 428 (QUINTAVALLA) <br> * Page 2, lignes 4-7; page 2, ligne 29 - page 3, ligne 5; figure 5 * | 3 | DOMAINES TECHNIQUES RECHERCHES (Int. Cl. ³) <br><br> B 26 D <br> A 22 C |
| A | FR-A-2 395 349 (PESOLA & JÄMSEN) <br> * Page 4, lignes 21-22; figure 5b * | 5 | |
| A | CH-A- 184 285 (MÜLLER) <br> * En entier * | 7,8 | |
| | --- -/- | | |

Le présent rapport de recherche a été établi pour toutes les revendications

| Lieu de la recherche <br> LA HAYE | Date d'achèvement de la recherche <br> 13-06-1984 | Examinateur <br> DE LAMEILLIEURE D. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

**0120759**

Numéro de la demande

# RAPPORT DE RECHERCHE EUROPEENNE

Office européen
des brevets

N° 84 40 0492

| | DOCUMENTS CONSIDERES COMME PERTINENTS | | Page 2 |
|---|---|---|---|
| Catégorie | Citation du document avec indication, en cas de besoin, des parties pertinentes | Revendication concernée | CLASSEMENT DE LA DEMANDE (Int. Cl. 3) |
| A | GB-A- 270 894 (GRAFF)<br><br>- - - - - | | |
| | | | DOMAINES TECHNIQUES RECHERCHES (Int. Cl. 3) |

Le présent rapport de recherche a été établi pour toutes les revendications

| Lieu de la recherche<br>LA HAYE | Date d'achèvement de la recherche<br>13-06-1984 | Examinateur<br>DE LAMEILLIEURE D. |
|---|---|---|